# EUROPÄISCHE PATENTSCHRIFT

(11) **EP 1 112 457 B1**
(45) Veröffentlichungstag und Bekanntmachung des Hinweises auf die Patenterteilung: **17.07.2002**
(21) Anmeldenummer: 99946092.6
(22) Anmeldetag: 02.09.1999
(51) Int. Cl.: F16L 13/14

(54) **FITTING FÜR EIN FLUIDFÜHRENDES ROHR**
FITTING FOR A FLUID-CARRYING PIPE
RACCORD DESTINE A UN TUYAU PERMETTANT D'ACHEMINER UN LIQUIDE

(30) Priorität: 12.09.1998 DE 19841800; 22.12.1998 DE 19859413
(43) Veröffentlichungstag der Anmeldung: 04.07.2001
(73) Patentinhaber: Uponor Innovation AB, 513 81 Fristad (SE)
(72) Erfinder: BRÄGELMANN, Peter, D-48607 Ochtrup (DE); KÖHLER, Guido, D-48607 Ochtrup (DE); RIESSELMANN, Franz-Josef, D-49393 Lohne (DE)
(74) Vertreter: Hilleringmann, Jochen, Dipl.-Ing.
(86) Internationale Anmeldenummer: EP9906444
(87) Internationale Veröffentlichungsnummer: WO0015995

(56) Entgegenhaltungen:
- DE-U- 29 802 519
- US-A- 5 130 199
- US-A- 5 531 454
- US-A- 5 707 087

## Beschreibung

Die Erfindung betrifft einen Fitting für ein fluidführendes Rohr, insbesondere ein gasführendes Rohr, wie zum Beispiel aus US-A-5 531 454 bekannt ist.

Bezüglich des Anschlusses eines Rohres, etwa eines Metall-, Kunststoff- oder Kunststoff-Metall-Verbundrohres an einem Fitting wird verlangt, daß diese Rohrverbindung fluiddicht ist. Dies soll auch dann noch der Fall sein, wenn die Rohrverbindung z.B. bei einem Brand oder aufgrund anderer Umstände einer erhöhten Temperatur ausgesetzt ist. Versuche sowohl mit Preßfittingen, bei denen das Rohr durch plastische Verformung einer Preßhülse gegen den.Rohranschlußabschnitt des Fittingkörpers gepreßt und damit abgedichtet an diesem anliegt, als auch mit Schiebehülsenfittings, bei denen eine zusätzliche Hülse axial auf Rohrende und Fittingkörper aufgesetzt wird, als auch mit Klemmringverschraubungen, bei denen die Dichtwirkung durch Radialpressung und einen zusätzlichen O-Ring erlangt wird, haben gezeigt, daß die Dichtigkeit unter Umständen nach einer übermäßigen Erhitzung des Fittings nicht mehr gegeben ist.

Der Erfindung liegt die Aufgabe zugrunde, einen Fitting zu schaffen, bei dem die Rohrverbindung auch nach starker Erhitzung weiterhin für das vom Rohr geführte Fluid dicht ist.

Zur Lösung dieser Aufgabe wird mit der Erfindung ein Fitting gemäß Anspruch 1 vorgeschlagen.

Bei der Erfindung ist innerhalb des Rohranschlußbereichs des Fittingkörpers ein spezielles Abdichtelement eingesetzt, das ein Material aufweist, welches sein Volumen bei Erhitzung, d.h. bei Erwärmung, bis über einen materialabhängigen Temperaturwert vergrößert. Diese Aufblähung des Materials des Abdichtelements ist insbesondere auf eine chemische Reaktion zurückzuführen. Derartige "Blähmaterialien" sind grundsätzlich bekannt; Aufblähvorgänge sind z.B. von schäumbaren Kunststoffen insbesondere auf PU-Basis bekannt. Aber auch andere Kunststoffe, wie z.B. PP, PE lassen sich durch Freisetzen von Gasen aufblähen und damit in ihrem Volumen vergrößern.

Der Aufblähvorgang bei dem erfindungsgemäß eingesetzten Abdichtelement wird in Abhängigkeit von der Temperatur ausgelöst; die die Volumenausdehnung verursachenden chemischen Reaktionen, insbesondere eine Gasfreisetzung ist also temperaturgesteuert.

Bei Verwendung eines Abdichtelements, das aus einem Aufblähmaterial der vorstehend beschriebenen Art besteht bzw. ein solches Material aufweist, für einen Fitting ist es also möglich, die Rohrverbindung auch nach einer thermischen Beanspruchung des Fittings fluiddicht zu halten. Damit ist die Gefahr, daß das Gas bzw. Fluid auch nach einer Erhitzung des Fittings freigesetzt wird bzw. aus der Rohrverbindung entweicht, minimiert.

Zweckmäßig ist es, wenn das Abdichtelement in einem Aufnahmeraum des Fittings angeordnet ist, der insbesondere als Vertiefung innerhalb des Rohranschlußabschnitts ausgebildet ist und von dem rohr im angeschlossenen Zustand überdeckt ist. Das Volumen dieses Aufnahmeraums ist derart bemessen, daß es größer ist als das Volumen des Abdichtelements im nicht aufgeblähten Zustand. Dieser Aufnahmeraum dient damit auch als Entlastung für den sich beim Aufweiten entstehenden Materialdruck des Abdichtelements.

In vorteilhafter Weiterbildung der Erfindung ist vorgesehen, daß das zuvor beschriebene Abdichtelement zusätzlich zu einem Abdichtelement aus einem "normalen" Abdichtelement" (z.B. Gummi, EPDM o.dgl.) eingesetzt wird. Dieses "normale" Abdichtelement übernimmt die Dichtfunktion der Rohrverbindung bei Normalbetriebsbedingungen, während das aufblähbare Abdichtelement für die Abdichtung bei erhöhten Betriebstemperaturen sorgt. Je nach den Eigenschaften des Blähmaterials kann das aus diesem bestehende oder dieses Material aufweisende Abdichtelement aber auch in beiden Fällen allein die Dichtfunktion übernehmen.

Von Vorteil für die Abdichtung der Rohrverbindung bei und nach Erhitzung des Fittings ist es ferner, wenn das aufquellende Material Adhäsiv-Eigenschaften aufweist. Dann entsteht an den Grenzschichten zum Rohrabdichtabschnitt des Fittings und zum Rohr eine Klebewirkung bzw. -verbindung, die fluiddicht ist. Die Fluiddichtigkeit kann aber auch einzig und allein durch Erhöhung der Anpreßkraft (Flächenpressung) des Abdichtelements zum Fitting und zum Rohr hin erzielt werden.

Das aufquellende bzw. aufblähende Abdichtelement kann sowohl bei einem Fitting mit Rohrinnenabdichtung als auch bei einem Fitting mit Rohraußenabdichtung eingesetzt werden.

Gemäß einer vorteilhaften Variante bzw. Weiterbildung der Erfindung ist vorgesehen, daß das aufblähbare Abdichtelement derart angeordnet ist, daß es bei auf den Rohrabschlußabschnitt aufgeschobenem Rohr an dessen Stirnseite anliegt. Damit befindet sich das Abdichtelement im Übergangsbereich zwischen dem Stützkörper des Fittingkörpers und dessen übrigen Teil. Es ist grundsätzlich bekannt, zur galvanischen Trennung des Rohres gegenüber dem Fittingkörper an diesem ein ringförmiges Element vorzusehen, an dem die Stirnseite des Rohres anliegt. Die galvanische Trennung ist in erster Linie für Kunststoff/Metall-Verbundrohre von Bedeutung, da die Metallmaterialien für den Fittingkörper und das Verbundrohr unterschiedlich sind. Wird dieses an sich bekannte Abdichtelement erfindungsgemäß aus einem aufquellende bzw. aufblähenden Material gefertigt, so kann das Element neben der galvanischen Trennung auch die Abdichtung im Falle einer Erwärmung des Fittings mit angeschlossenem Rohr über die für das aufquellende bzw. aufblähende Material spezifischen Temperatur genutzt werden.

Nach der Erfindung ist ferner vorgesehen, daß sich das Material des aufquellenden bzw. aufblähenden Abdichtelements zur Innenseite und/oder zur Außenseite des stirnseitigen Endes des Rohres ausdehnen kann. Zu diesem Zweck ist der Aufnahmeraum für das Abdichtelement mit einer Vertiefung verbunden, die in dem Rohranschlußabschnitt des Fittingkörpers ausgebildet ist und bei auf dem Rohranschlußabschnitt aufgeschobenem Rohr von dessen stirnseitigen Ende zumindest teilweise, insbesondere vollständig überdeckt ist. Das Abdichtelement kann sich nun bis in den Vertiefungsbereich hinein ausdehnen und liegt damit an der Innenseite des Rohres im Bereich von dessen stirnseitigem Ende an. Die Vertiefung stellt also sozusagen einen "Entlastungsbereich" für das sich ausdehnende Abdichtelement dar.

Zusätzlich ist es von Vorteil, wenn das aufquellende bzw. aufblähende Material des Abdichtelements auch sich in Richtung außerhalb des Rohres ausdehnen kann. Bei vollständig aufgequelltem bzw. aufgeblähtem Abdichtelement befindet sich dann dessen Material also außerhalb und innerhalb des Rohres im Bereich von dessen stirnseitigen Ende, schließt also das stirnseitige Ende des Rohres beidseitig ein. Dabei ist stets noch ein Austritt des aufquellenden bzw. aufblähenden Materials des Abdichtelements nach außerhalb des Rohres möglich, so daß es zu keinerlei das Rohr bzw. dessen stirnseitiges Ende zerstörenden Spannungs- bzw. Ausdehnungskräften kommt.

Zweckmäßigerweise befindet sich das Abdichtelement in einem Aufnahmeraum, der im Übergangsbereich zwischen dem Rohranschlußabschnitt und dem übrigen Teil des Fittingkörpers ausgebildet ist. Der Aufnahmeraum ist dabei zweckmäßigerweise als Ringnut ausgebildet, die in axialer Richtung des Rohranschlußabschnitts ausgerichtet und offen ist. An dem ringförmigen Grund dieser Ringnut liegt dann zweckmäßigerweise das Abdichtelement an. Dieser Ringraum ist zweckmäßigerweise derart bemessen, daß er auch noch das stirnseitige Ende des anzuschließenden Rohres aufnehmen kann. In radialer Richtung ist dieser Ringraum zweckmäßigerweise derart dimensioniert, daß sich bei eingetauchtem stirnseitigen Ende des Rohres sowohl an der Innenseite als auch an dessen Außenseite an Freiraum bildet. Der Freiraum an der Innenseite entspricht der oben bereits beschriebenen Vertiefung, während der Freiraum an der Außenseite sozusagen als Entlastungsdurchlaß für das sich aufquellende bzw. aufblähende Material des Abdichtelements fungiert.

Durch das Anordnen eines bei Erwärmung über eine materialspezifische Temperatur aufquellenden bzw. aufblähenden Abdichtelements gemäß der zuvor beschriebenen Variante der Erfindung wird eine Rundumabdichtung des Rohrendes erreicht. Materialschwindungen werden somit besser und sicherer verkraftet bzw. kompensiert. Durch die Möglichkeit, daß das aufquellende bzw. aufblähende Material des Abdichtelements nach außen entweichen kann, wird der entstehende Druck beim Aufquellen bzw. Aufblähen besser abgebaut.

Eine weitere Variante des erfindungsgemäßen Fittings besteht darin, daß sowohl im Rohranschlußabschnitt des Fittingkörpers als auch an der Innenseite der Preßhülse jeweils ein Abdichtelement aus einem aufquellenden bzw. aufblähenden Material angeordnet ist. Diese Abdichtelemente befinden sich dabei in demjenigen Bereich des Fittings, in dem das stirnseitige Ende des anzuschließenden Rohres angeordnet ist, wenn dieses auf dem Rohranschlußabschnitt des Fittingkörpers aufgeschoben ist. Die beiden Abdichtelemente liegen an der Innenund an der Außenseite des anzuschließenden Rohres an. Für beide Abdichtelemente sind Vertiefungen vorgesehen, die zum einen im Rohranschlußabschnitt und zum anderen in der Preßhülse ausgebildet sind. Die Vertiefung in der Preßhülse ist dabei vorzugsweise als Sicke ausgebildet.

In demjenigen Bereich des Fittingkörpers, der dem stirnseitigen Ende des Rohres im Anschlußzustand gegenüberliegt (bei herkömmlichen Fittingkörpern ist dieser Bereich als Anschlagfläche für das stirnseitige Ende des Rohres ausgebildet), befindet sich bei dem erfindungsgemäßen Fittingkörper gemäß einer vorteilhaften Weiterbildung der Erfindung eine Aussparung oder Vertiefung, die mit mindestens einer der beiden Vertiefungen verbunden ist, in denen die Abdichtelemente angeordnet sind. Die Vertiefung in der Anschlagfläche des Fittingkörpers braucht nicht notwendigerweise umlaufend ausgebildet zu sein. Vielmehr reichen abschnittsweise sich über den Umfang erstreckende Vertiefungen aus. Damit bleibt zwischen den Vertiefungen Material, das als Anschlagfläche für das stirnseitige Ende des Fittingkörpers fungiert.

Um die Dichtigkeit des erfindungsgemäßen Fittings im verpreßten Zustand weiter zu erhöhen, ist gemäß einer anderen vorteilhaften Ausgestaltung der Erfindung vorgesehen, daß die Preßhülse vorzugsweise außerhalb des Rohranschlußabschnitts fluiddicht mit dem Fittingkörper verbunden ist. Diese fluiddichte Abdichtung kann beispielsweise durch eine stoffschlüssige Verbindung oder einen Preßsitz von Preßhülse und Fittingkörper realisiert werden. Im Falle einer stoffschlüssigen Verbindung kommen insbesondere Löten, Schweißen und Kleben in Frage. Die fluiddichte Verbindung ist insbesondere in demjenigen Bereich des Fittingkörpers ausgebildet, in dem dieser seine Anschlagfläche für das stirnseitige Ende des anzuschließenden Rohres bzw. die bereits oben angesprochene Vertiefung aufweist. Zweckmäßigerweise ist die Preßhülse an ihrem fluiddicht mit dem Fittingkörper verbundenen Ende um einen umlaufenden Vorsprung des Fittingkörpers umgebördelt. Dies erleichtert auch den Montageaufwand, da nun Fittingkörper und Preßhülse eine vormontierte Einheit bilden, die nach Einschieben des anzuschließenden Rohres in den Ringzwischenraum zwischen der Preßhülse und dem Rohranschlußabschnitt des Fittingkörpers lediglich noch verpreßt zu werden braucht.

Nachfolgend werden anhand der Figuren mehrere Ausführungsbeispiele der Erfindung näher erläutert. Im einzelnen zeigen:
- Fig. 1: einen Halbschnitt durch einen Fitting mit an diesem angeschlossenem Rohr gemäß einem Ausführungsbeispiel, das nicht im Rahmen der Erfindung liegt und bei dem das aufquellende bzw. aufblähende Abdichtelement an der Innenseite des Rohres anliegt,
- Fig. 2: einen Halbschnitt durch einen Fitting mit an diesem angeschlossenem Rohr gemäß der Erfindung, bei dem das aufquellende bzw. aufblähende Abdichtelement an der Stirnseite des Rohres anliegt, und zwar im Zustand vor einer Volumenvergrößerung des Abdichtelements,
- Fig. 3: die Situation des Fittings gemäß Fig. 2 nach einer Volumenvergrößerung des Abdichtelements und
- Fign. 4 und 5: Halbschnitte durch zwei Fittinge gemäß weiteren Ausführungsbeispielen der Erfindung mit zusätzlich zu dem bzw. den aufquellenden bzw. aufblähenden Abdichtelement/Abdichtelementen vorgesehener Abdichtung der metallischen Preßhülse an dem metallischen Fittingkörper.

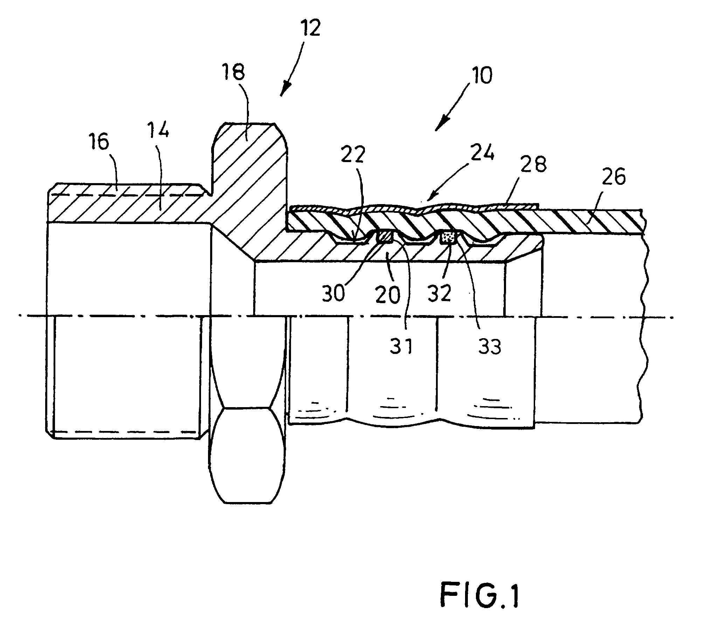

Gemäß Fig. 1, die nicht im Rahmen der Erfindung liegt, weist der Fitting 10 einen Fittingkörper 12 auf, der einen Teil 14 mit z.B. einem Außengewinde 16 und/oder Bund 18 (z.B. mit Außensechskantkontur) und einen davon abstehenden Stützkörper 20 aufweist. Der Stützkörper 20 weist eine mit Rillen und Nuten versehene, gegebenenfalls auch ein Sägezahnprofil aufweisende Außenfläche 22 auf, die den Rohranschlußabschnitt 24 bildet. Auf den Stützkörper 20 wird das Ende eines anzuschließenden Rohres 26 aufgeschoben. Von außen an dem Rohr 26 liegt beispielhaft eine Metall-(Preß-)Hülse 28 an, die durch z.B. eine Ringpressung radial gegen das Rohr 26 gepreßt ist und damit dieses an seiner Innenseite fest gegen den Rohranschlußabschnitt 24 drückt.

Außen an dem Stützkörper 20 sind zwei ringförmige Abdichtelemente 30 und 32 in Aufnahmenuten 31 und 33 angeordnet. Das Abdichtelement 30 besteht aus einem Gummi- oder elastischen Kunststoffmaterial und dient der Abdichtung zwischen dem Stützkörper 20 und dem Rohr 26 bei normalen Betriebsbedingungen, insbesondere bei normalen Betriebstemperaturen. Dagegen soll das zweite Abdichtelement 32 insbesondere dann abdichten, wenn und nach dem der Fitting 10 und das angeschlossene Rohr 26 erhöhten Temperaturen ausgesetzt sind. Zu diesem Zweck weist das Abdichtelement 32 ein aufblähbares bzw. aufquellbares Material auf, das bei Erhitzung über einen materialspezifischen Temperaturwert hinaus eine irreversible Volumenvergrößerung erfährt, die insbesondere durch eine temperaturgesteuerte chemische Reaktion initiiert ist.

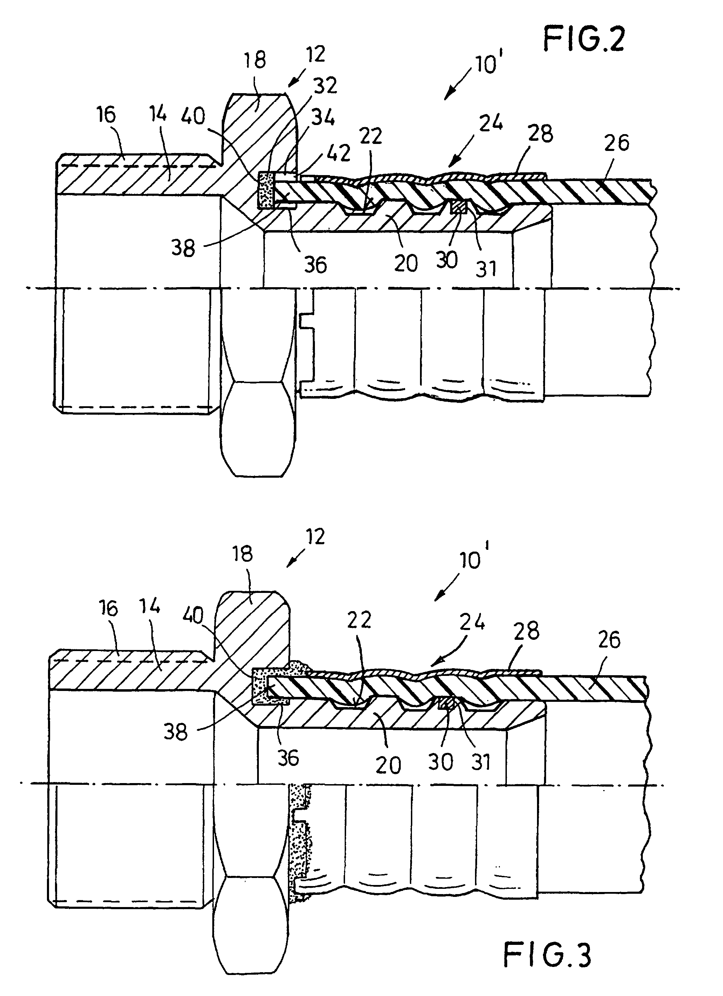

Ein Ausführungsbeispiel nach der Erfindung soll nachfolgend anhand von Fign. 2 und 3 erläutert werden. Gemäß dieser Figuren weist der Fitting 10' einen Fittingkörper 12 auf, der einen Teil 14 mit beispielsweise einem (nicht dargestellten) Außengewinde und/oder einem Bund (beispielsweise mit Außensechskantkontur) sowie einen davon abstehenden Stützkörper 20 aufweist. Der Stützkörper 20 ist mit einer mit Rillen und Nuten versehenen, gegebenenfalls auch ein Sägezahnprofil aufweisenden Außenfläche 22 versehen, die den Rohranschlußabschnitt 24 bildet. Auf den Stützkörper 20 wird das Ende eines anzuschließenden Rohres 26 aufgeschoben. Von außen an dem Rohr 26 liegt beispielsweise eine Metall-(Preß-)Hülse 28 an, die durch insbesondere einer Ringpressung radial von außen gegen das Rohr 26 gepreßt ist und damit dieses an seiner Innenseite fest gegen den Rohranschlußabschnitt 24 drückt.

Außen an dem Stützkörper 20 befindet sich ein O-Ring-Abdichtelement 30, das aus einem Gummi- oder elastischen Kunststoffmaterial besteht und der Abdichtung zwischen dem Stützkörper 20 und dem Rohr 26 bei normalen Betriebsbedingungen, insbesondere bei normalen Betriebstemperaturen, dient.

Bei dem in den Fign. 2 und 3 gezeigten Fitting 10' befindet sich das Abdichtelement 32 aus aufquellendem bzw. aufblähendem Material innerhalb eines ringförmigen Aufnahmeraums 34, der im Übergangsbereich zwischen dem Stützkörper 20 und dem Bund 18 ausgebildet ist. Die radiale Erstreckung sowie die Anordnung dieses Aufnahmeraums 34 sind derart gewählt, daß die Innenseite 36 gegenüber der Außenfläche 22 des Stützkörpers 20 radial einwärts versetzt ist und das stirnseitige Ende 38 des Rohres 26 in den Aufnahmeraum 34 zumindest teilweise eingetaucht ist, wobei sich sowohl zur Innenseite als auch zur Außenseite des Rohres 26 im Aufnahmeraum 34 Freiräume ergeben. Das Abdichtelement 32 liegt am Grund 40 des Ringraumes 34 an. An der Außenseite des stirnseitigen Endes 38 des Rohres 26 befindet sich ein Durchlaß 42, der bis außerhalb des Fittings 10' reicht. Damit dieser Durchlaß 42 nicht durch das dem Bund 18 des Fittingkörpers 12 zugewandte Ende der Preßhülse 28 versperrt ist, ist diese entweder mit Abstand zum Bund 18 angeordnet oder aber weist diese stirnseitig offene Aussparungen auf.

Durch die zuvor beschriebene Ausbildung des Aufnahmeraums 34 befinden sich bei Normalbetriebsbedingungen, insbesondere Normalbetriebstemperaturen des Fittings 10' am stirnseitigen Ende 38 des angeschlossenen Rohres 26 innen und außen Freiräume, die einerseits durch die radial einwärts gerückte Innenseite 36 und andererseits durch den Durchlaß 42 des Aufnahmeraums 34 gebildet sind. Das Abdichtelement 32 selbst liegt vorzugsweise an dem stirnseitigen Ende 38 des Rohres 26 an, was aber nicht notwendigerweise so sein muß; denn dieses Element 32 dient im Normalbetriebszustand des Fittings 10' nicht der Abdichtung des Fittingkörpers gegenüber dem Rohr 26, da dies von dem Abdichtelement 30 übernommen wird.

Im ausgedehnten Zustand des Abdichtelements 32, d.h., nach dem dies insbesondere durch chemische Reaktion initiiert aufgequellt bzw. aufgebläht ist, befindet sich in den Freiräumen Material des Abdichtelements, wie es beispielsweise in Fig. 2 gezeigt ist. Dabei gelangt das sich ausdehnende Material des Abdichtelements 32 zum einen in den Bereich unterhalb des stirnseitigen Endes 38 des Rohres 26 und zum anderen in den Bereich außerhalb dieses stirnseitigen Endes, wo es durch den Durchlaß 42 hindurch bis nach außen über das Rohr 26 bzw. die Preßhülse 28 wandert. Nach einer Überhitzung des Fittings 10' ist damit das stirnseitige Ende 38 des angeschlossenen Rohres 26 rundherum abgedichtet, wodurch die Abdichtfunktion zuverlässig gewährleistet ist. Ferner können sich bei Ausdehnung des Materials des Abdichtelements 32 entstehende Drücke durch die Möglichkeit des Entweichens des Materials über den Durchlaß 42 besser und zuverlässiger abbauen. Durch Wahl des Querschnitts des Durchgangs 42 bzw. durch dessen Formgebung ist es möglich, auf die Größe des sich auf das stirnseitige Ende auswirkenden Drucks des ausdehnenden Materials des Abdichtelements 32 Einfluß zu nehmen.

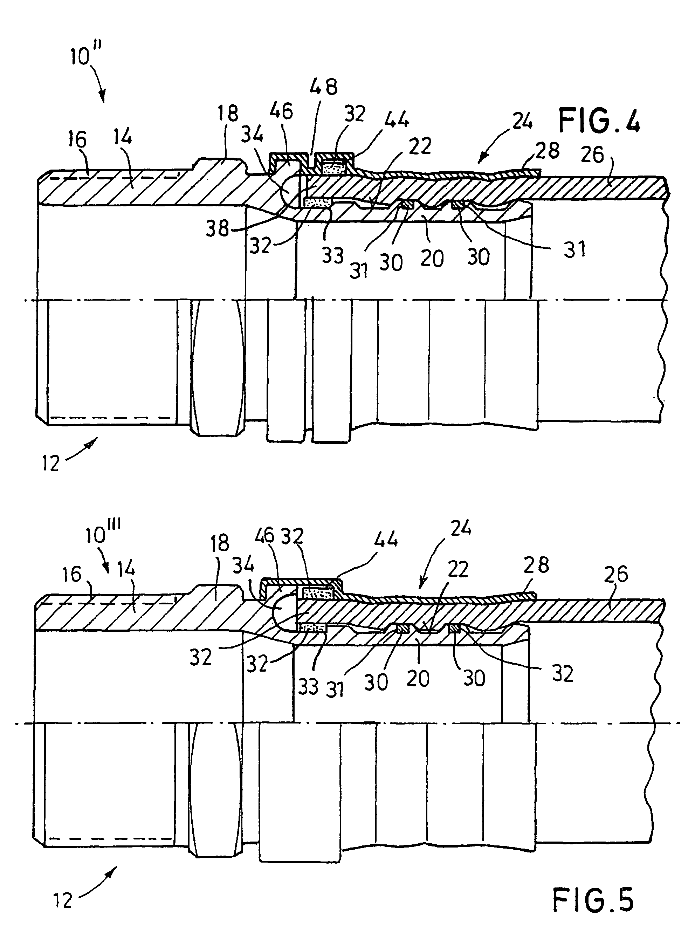

Anhand der Fign. 4 und 5 werden weitere Ausführungsbeispiele von Fittingkörpern 10" und 10''' erläutert. Beiden Ausführungsbeispielen gemein ist der Umstand, daß sich ein Abdichtelement aus in Abhängigkeit von der Temperatur aufblähendem bzw. aufquellendem Material sowohl an der Innenseite des anzuschließenden Rohres als auch an dessen Außenseite befindet. So weit in den Fign. 4 und 5 die dort gezeigten Teile der Fittinge 10'' und 10''' denjenigen der Fign. 1 bis 3 entsprechen bzw. funktionsgleich sind, sind sie mit den gleichen Bezugszeichen versehen.

Bei dem Ausführungsbeispiel gemäß Fig. 4 befindet sich das innenliegende Abdichtelement 32 in einer Aufnahmevertiefung 33, die im Stützkörper 20 ausgebildet ist, während das zweite Abdichtelement 32 in einem Aufnahmeraum 44 untergebracht ist, die in Form einer Sicke in der Preßhülse 28 ausgebildet ist. Die Vertiefung 33 und der Aufnahmeraum 44 sind im wesentlichen einander gegenüberliegend angeordnet und befinden sich benachbart zu einem sich an den Stützkörper 20 anschließenden Anschlagsbereich 46 des Fittingkörpers 12, der die Funktion eines Anschlagendes für das anzuschließende aufgeschobene Rohr 26 übernehmen kann. In diesem Anschlagsbereich 46 ist eine in axialer Richtung des Fittingkörpers 12 in diesen eindringende Nute 34 vorgesehen, die umlaufend gegebenenfalls mit Unterbrechungen ausgebildet ist. Diese Vertiefung 34 ist mit der (Aufnahme-)Vertiefung 33 für das Abdichtelement 32 des Stützkörpers 20 verbunden. Auch das außenliegende Abdichtelement 32 ist bei dem Ausführungsbeispiel gemäß Fig. 5 mit dieser Vertiefung bzw. mit dieser unterbrochenen Vertiefung 34 verbunden, während bei dem Ausführungsbeispiel gemäß Fig. 4 eine Trennung des Aufnahmeraums 44 für das außenliegende Abdichtelement 32 von der Vertiefung 34 vorgesehen ist.

Wie in den Fign. 4 und 5 gezeigt, übergreift die Preßhülse 28 mit ihrem dem Gewinde 16 des Fittingkörpers 12 zugewandten Ende den Anschlagsbereich 46 des Fittingkörpers. In diesem Bereich ist zwischen Preßhülse 28 und Fittingkörpers 12 eine fluiddichte Verbindung gegeben, die beispielsweise durch Verschweißung, von Löten und Verkleben oder durch Preßsitz realisiert ist. Die Preßhülse 28 ist in diesem Abschnitt aufgeweitet, um den Anschlagsabschnitt 46 von außen zu umgreifen. Diese Aufweitung bildet bei dem Ausführungsbeispiel gemäß Fig. 5 den Aufnahmeraum 44 für das außenliegende Abdichtelement 32, während im Falle der Ausgestaltung gemäß Fig. 4 der aufgeweitete Abschnitt der Preßhülse 28 eine Einschnürung 48 aufweist. Im Bereich dieser Einschnürung 48 liegt die Preßhülse 28 von außen an dem anzuschließenden Rohr 26 an und umschließt darüber hinaus den Anschlagsabschnitt 46. Bei diesem Ausführungsbeispiel sind damit der Aufnahmeraum 44 für das außenliegende Abdichtelement und die Vertiefung 34 im Anschlagsabschnitt 46 des Fittingkörpers 12 voneinander getrennt.

In beiden Fällen dient die Vertiefung 34 als Expansionsraum für das sich unter Beeinflussung oder in Abhängigkeit von der Temperatur ausdehnende Material mindestens eines der beiden Abdichtelemente. So kann beispielsweise bei dem Fitting 10'' das Material des innenliegenden Abdichtelements 32 in die Vertiefung 34 des Fittingkörpers 12 eindringen, während im Falle des Ausführungsbeispiels gemäß Fig. 5 das Material beider Abdichtelemente 32 in die Vertiefung 34 eindringen kann. In beiden Fällen wird sichergestellt, daß die Verbindung von Rohr 26 und Fittingkörper 12 bei Aussetzung höherer Temperaturen noch gasdicht ist. Der gasdichte Abschluß zwischen Preßhülse 28 und Fittingkörper 12 bei den Ausführungsbeispielen gemäß den Fign. 4 und 5 sichert darüber hinaus diesen gasdichten Abschluß nach außen weiterhin ab.

Selbstverständlich läßt sich die fluiddichte Verbindung der Preßhülse 28 mit dem Fittingkörper 12 auch den anderen hier beschriebenen Ausführungsbeispielen realisieren. Die Expanisionsräume für die aufquellenden Abdichtelemente sorgen zum einen dafür, daß auch stirnseitig abgedichtet wird, zum anderen aber auch dafür, daß die auf das Rohr 26 wirkenden Kräfte beim Aufquellen der Materialien in Grenzen gehalten werden, was damit auch für mögliche Verformungen des Rohres 26 in den an den Abdichtelementen 32 angrenzenden Bereichen der Außen- und Innenseiten gilt.

## Patentansprüche

1. Fitting für ein fluidführendes Rohr, mit
- einem Fittingkörper (12), der einen Rohranschlussabschnitt (24) aufweist, in dem ein anzuschließendes Rohr (26) an dem Fittingkörper (12) anliegt,
**dadurch gekennzeichnet,**
- **dass** innerhalb des Rohranschlussabschnitts (24) des Fittingkörpers (12) ein Abdichtelement (32) aus einem Material angeordnet ist, das sich ab einer vorgebbaren Temperatur, insbesondere durch eine chemische Reaktion initilert, irreversibel aufbläht,
- **dass** das Abdichtelement (32) zur Anlage an der Stirnseite des Rohres (26) vorgesehen ist,
- **dass** das Abdichtelement (32) in einem Aufnahmeraum (34) des Fittingkörpers (12) angeordnet ist und
- **dass** der Aufnahmeraum (34) mit einer Vertiefung (36) in Verbindung steht, die innerhalb des Rohranschlussabschnitts (24) des Fittingkörpers (12) ausgebildet ist und bei auf dem Rohranschlussabschnitt (24) aufgeschobenem Rohr von dessen stirnseitigem Ende (38) zumindest teilweise überdeckt ist.

2. Fitting nach Anspruch 1, **dadurch gekennzeichnet, dass** der Aufnahmeraum (34) mit einem am stirnseitigen Ende (38) des Rohres (26) außerhalb von diesem gelegenen Bereich verbunden ist.

3. Fitting nach Anspruch 1 oder 2, **dadurch gekennzeichnet, dass** der Aufnahmeraum (34) eine Radialerstreckung aufweist, die größer ist als die Wanddicke des anzuschließenden Rohres (26), und eine quer dazu gerichtete Längserstreckung aufweist, die neben der Aufnahme des Abdichtungselements (32) auch die Aufnahme des stirnseitigen Endes (38) des anzuschließenden Rohres (26) erlaubt.

4. Fitting nach einem der Ansprüche 1 bis 3, **dadurch gekennzeichnet, dass** der Fittingkörper (12) einen Abstützabschnitt (20) zur Anlage an der Innenseite des anzuschließenden Rohres (26) aufweist und dass eine plastisch verformbare Presshülse (28) zum Umgeben des an dem Abstützabschnitt (20) anliegenden anzuschließenden Rohres (26) an dessen Außenseite vorgesehen ist.

5. Fitting nach Anspruch 4, **dadurch gekennzeichnet, dass** in dem Abstützabschnitt (20) und/oder in der Presshülse (28) jeweils eine Aufnahmevertiefung (33;44) für ein Abdichtelement (32) ausgebildet ist.

6. Fitting nach Anspruch 4 oder 5, **dadurch gekennzeichnet, dass** sowohl an dem Abstützabschnitt (20) als auch an der Presshülse (28) eine Aufnahmevertiefung (33;44) ausgebildet ist.

7. Fitting nach Anspruch 6, **dadurch gekennzeichnet, dass** die beiden Aufnahmevertiefungen nahe dem stirnseitigen Ende des Rohres in dessen aufgeschobenen Zustand angeordnet und bei aufgeschäumtem Material der Abdichtelemente (32) über einen am Fittingkörper (12) vorgesehenen Expansionsraum (34) miteinander verbunden sind.

8. Fitting nach Anspruch 4, **dadurch gekennzeichnet, dass** die Presshülse (23) fluiddicht mit dem Fittingkörper (12) verbunden ist, und zwar vorzugsweise außerhalb des Rohranschlussabschnitts (24) des Fittingkörpers (12).

9. Fitting nach einem der Ansprüche 1 bis 8, **dadurch gekennzeichnet, dass** das Abdichtelement (32) die Form eines Rings, insbesondere eines O-Rings aufweist.

10. Ftting nach einem der Ansprüche 1 oder 9, **dadurch gekennzeichnet, dass** das Abdichtelement (32) seine Dichtfunktion nicht nur bei thermischer Beanspruchung durch Aufblähung, sondern auch im Normalbetriebszustand des Fittingkörpers (12) ausübt.

11. Rtting nach einem der Ansprüche 1 bis 10, **dadurch gekennzeichnet, dass** die Dichtwirkung durch Erhöhung des Anpressdrucks des Abdichtelements (32) gegen den Rohranschlussabschnitt (24) einerseits und das Rohr (26) andererseits hervorgerufen ist.

12. Fitting nach einem der Ansprüche 1 bis 11, **dadurch gekennzeichnet, dass** die Dichtwirkung auch durch adhäsive Eigenschaften des Materials des Abdichtelements (32) hervorgerufen ist.

13. Fitting nach einem der Ansprüche 1 bis 12, **dadurch gekennzeichnet, dass** die Volumenvergrößerung des Materials des Abdichtelements (32) durch Aufschäumen des Materials bei Erhitzung desselben oberhalb der vorgebbaren Temperatur erfolgt.

14. Rtting nach einem der Ansprüche 1 bis 13, **dadurch gekennzeichnet, dass** das Abdichtelement (32) zur Anlage an dem Rohr (26) von außen oder von innen vorgesehen ist.

15. Fitting nach Anspruch 14, **dadurch gekennzeichnet, dass** das Abdichtelement (32) innerhalb eines Aufnahmeraums (34) angeordnet ist, dessen Volumen größer bemessen ist als das Volumen des Abdichtelements (32) vor dessen Aufblähung.

## Claims

1. A fitting for a fluid-carrying tube, comprising
- a fitting body (12) comprising a tube connector portion (24) within which a tube (26) to be connected is in abutment on the fitting body (12),
**characterized in**
- **that** the tube connector portion (24) of the fitting body (12) accommodates therein a sealing element (32) of a material adapted to expand irreversibly upon reaching a predetermined temperature, said expansion being especially initiated through a chemical reaction,
- **that** the sealing element (32) is provided to abut on the end face of the tube (26),
- **that** the sealing element (32) is arranged in a receiving chamber (34) of the fitting body (12) and
- **that** the receiving chamber (34) is connected with a recess (36) formed within the tube connector portion (24) of the fitting body (12) and, with the tube mounted on the tube connector portion (24), is at least partially covered by the front end (38) of the tube.

2. The fitting according to claim 1, **characterized in that** the receiving chamber (34) is connected to a region located at the front end (38) of the tube (26) externally thereof.

3. The fitting according to claim 1 or 2, **characterized in that** the receiving chamber (34) has a radial dimension which is larger than the wall thickness of the tube (26) to be connected, and has a longitudinal dimension oriented transverse thereto which, besides the receiving of the sealing element (32), also allows for the receiving of the front end (38) of the tube (26) to be connected.

4. The fitting according to any one of claims 1 to 3, **characterized in that** the fitting body (12) comprises a support portion (20) for abutment on the inner side of the tube (26) to be connected and that a plastically deformable pressing sleeve (28) is provided on the outer side of the tube (26) while surrounding the to-be-connected tube (26) abutting the support portion (20).

5. The fitting according to claim 4, **characterized in that** the support portion (20) and/or the pressing sleeve (28) each are formed with a respective receiving recess (33;44) for a sealing element (32).

6. The fitting according to claim 4 or 5, **characterized in that** both the support portion (20) and the pressing sleeve (28) are formed with a receiving recess (33;44).

7. The fitting according to claim 6, **characterized in that** the two receiving recesses are arranged close to the front end of the tube in the mounted condition thereof and, in the foamed condition of the material of the sealing elements (32), are connected to each other via an expansion chamber (34) provided on the fitting body (12).

8. The fitting according to claim 4, **characterized in that** the pressing sleeve (28) is connected to the fitting body (12) in a fluid-tight manner, preferably externally of the tube connector portion (24) of the fitting body (12).

9. The fitting according to any one of claims 1 to 8, **characterized in that** the sealing element (32) is shaped as a ring, particularly an O-ring.

10. The fitting according to any one of claims 1 to 9, **characterized in that** the sealing element (32) fulfills its sealing function not only upon thermal stress by expansion but also in the normal condition of the fitting body (12).

11. The fitting according to any one of claims 1 to 10, **characterized in that** the sealing effect is generated by increasing the abutment pressure of the sealing element (32) against the tube connector portion (24) on the one hand and against the tube (26) on the other hand.

12. The fitting according to any one of claims 1 to 11, **characterized in that** the sealing effect is also generated by adhesive properties of the material of the sealing element (32).

13. The fitting according to any one of claims 1 to 12, **characterized in that** the increase of the volume of the material of the sealing element (32) is obtained by expansive foaming of the material by heating the same above the predetermined temperature.

14. The fitting according to any one of claims 1 to 13, **characterized in that** the sealing element (32) is provided to abut the tube (26) from the outside or the inside.

15. The fitting according to claim 14, **characterized in that** the sealing element (32) is arranged within a receiving chamber (34) having a larger volume than the volume of the sealing element (32) prior to its expansion.

## Revendications

1. Raccord destiné à un tuyau permettant d'acheminer un liquide, avec
- un corps de raccord (12), qui présente un tronçon de raccord de tuyau (24), dans lequel un tuyau à raccorder (26) est adjacent au corps de raccord (12), **caractérisé en ce que**,
- à l'intérieur du tronçon de raccord de tuyau (24) du corps de raccord (12) est disposé un élément d'étanchéité (32), dont le matériau gonfle de façon irréversible à partir d'une température qu'on peut spécifier et qui est initiée en particulier par une réaction chimique,
- l'élément d'étanchéité (32) est prévu comme pièce annexée à l'extrémité frontale du tuyau (26)
- l'élément d'étanchéité (32) est placé dans un logement de réception (34) du corps de raccord (12) et
- le logement de réception (34) est en relation avec une cavité (36), formée à l'intérieur du tronçon de raccord de tuyau (24) du corps de raccord (12) et qui est, à l'endroit du tuyau enfilé sur le tronçon de raccord de tuyau (24), recouverte au moins en partie par l'extrémité frontale du tuyau.

2. Raccord selon la revendication 1, **caractérisé en ce que** le logement de réception (34) est relié à un espace situé à l'extrémité frontale (38) du tuyau (26) à l'extérieur de celui-ci.

3. Raccord selon la revendication 1 ou 2, **caractérisé en ce que** le logement de réception (34) présente une extension radiale, qui est plus grande que l'épaisseur de paroi du tuyau à raccorder (26) et qui présente une extension longitudinale orientée en travers, qui, à côté du logement de l'élément d'étanchéité (32), permet aussi de loger l'extrémité frontale (38) du tuyau à raccorder.

4. Raccord selon une des revendications 1 à 3, **caractérisé en ce que** le corps de raccord (12) présente un tronçon d'appui (20) annexé au coté intérieur du tuyau à raccorder (26) et **en ce qu'**un manchon de pression (28) à la forme ductile est prévu pour entourer le tuyau à raccorder (26) sur son côté extérieur, tuyau à raccorder qui est adjacent au tronçon d'appui (20).

5. Raccord selon la revendication 4, **caractérisé en ce que** dans le tronçon d'appui (20) et/ou dans le manchon de pression (28) est formée respectivement une cavité de réception (33;44) pour un élément d'étanchéité (32).

6. Raccord selon la revendication 4 ou 5, **caractérisé en ce qu'**une cavité de réception (33;44) est formée aussi bien au tronçon d'appui (20) qu'au manchon de pression (28).

7. Raccord selon la revendication 6, **caractérisé en ce que** les deux cavités de réception sont placées près de l'extrémité frontale du tuyau quand celui-ci est enfilé et reliées, lorsque le matériau de l'élément d'étanchéité (32) mousse, par une zone d'expansion (34) prévue sur le corps de raccord (12).

8. Raccord selon la revendication 4, **caractérisé en ce que** le manchon de pression (23) est relié de façon étanche au corps de raccord (12), et notamment de préférence à l'extérieur du tronçon de raccord de tuyau (24) du corps de raccord (12).

9. Raccord selon une des revendications 1 à 8, **caractérisé en ce que** l'élément d'étanchéité (32) présente la forme d'un anneau, en particulier d'un anneau torique.

10. Raccord selon une des revendications 1 à 9, **caractérisé en ce que** l'élément d'étanchéité (32) exerce sa fonction d'étanchéité par gonflement non seulement lors de charge thermique mais aussi en état de fonctionnement normal du corps de raccord (12).

11. Raccord selon une des revendications 1 à 10, **caractérisé en ce que** la fonction d'étanchéité est suscitée par l'augmentation de la pression de l'élément d'étanchéité (32) contre le tronçon de raccord de tuyau (24) d'une part et le tuyau (26) d'autre part.

12. Raccord selon une des revendications 1 à 11, **caractérisé en ce que** la fonction d'étanchéité est aussi suscitée par des propriétés adhésives du matériau de l'élément d'étanchéité (32).

13. Raccord selon une des revendications 1 à 12, **caractérisé en ce que** l'augmentation de volume du matériau de l'élément d'étanchéité (32) se produit sous forme de moussage quand le matériau est réchauffé au-delà de la température spécifiée.

14. Raccord selon une des revendications 1 à 13, **caractérisé en ce que** l'élément d'étanchéité (32) est prévu comme pièce annexée au tuyau (26) de l'extérieur ou de l'intérieur.

15. Raccord selon la revendication 14, **caractérisé en ce que** l'élément d'étanchéité (32) est placé à l'intérieur d'un logement de réception (34), dont le volume est dimensionné de façon plus importante que le volume de l'élément d'étanchéité (32) avant le gonflement de celui-ci.
